# EUROPÄISCHE PATENTSCHRIFT

(11) **EP 2 813 345 B1**
(45) Veröffentlichungstag und Bekanntmachung des Hinweises auf die Patenterteilung: **08.04.2015**
(21) Anmeldenummer: 13171737.3
(22) Anmeldetag: 12.06.2013
(51) Int. Cl.: B29C 51/26, B29C 51/30, B29C 51/22, B29C 33/30

(54) **Verfahren zum Werkzeugwechsel**
Method for changing a tool
Procédé de changement d'outil

(43) Veröffentlichungstag der Anmeldung: 17.12.2014
(73) Patentinhaber: Magna Steyr Fuel Systems GesmbH, 8261 Sinabelkirchen (AT)
(72) Erfinder: Spary, Bernhard, 8302 Nestelbach bei Graz (AT)
(74) Vertreter: Zangger, Bernd

(56) Entgegenhaltungen:
- EP-A1- 1 520 682
- DE-A1- 19 716 655
- DE-C1- 4 314 078
- GB-A- 2 363 752

## Beschreibung

Die Erfindung geht aus von einem Verfahren zum Einbringen von Werkzeugsätzen in eine thermoformende Maschine wobei die thermoformende Maschine mindestens eine Arbeitsstation für einen Werkzeugsatz aufweist und der Werkzeugsatz bestehend aus einem Ober- und einem Unterwerkzeug außerhalb der Arbeitsstation miteinander verbunden wird.

### Stand der Technik

In der Industrie werden Thermoformmaschinen im großen Umfang eingesetzt, siehe z.B. EP 1520682. Vor allem in der Verpackungsindustrie werden sie für die Herstellung von strukturierten Folien usw. genutzt. Auch in der Automobilindustrie werden Kunststoffbauteile im hohen Maße verwendet. Dabei zeichnet sich das Thermoformen von Folien und Platten durch günstige Werkzeugkosten aus und ist bei kleinen und mittleren Serien besonders wirtschaftlich. Beispiele für Thermoformteile sind Verkleidungen aller Art. Des Weiteren werden Kotflügel, Armaturen, Kunststofftanks und vieles mehr gefertigt. Insbesondere die Kombination aus Formgebung, Farbigkeit und Funktion führt vermehrt dazu, dass Hersteller auf dieses Verfahren zurückgreifen.

Grundsätzlich lassen sich sämtliche Thermoplaste in diesem Verfahren verarbeiten. Werden Platten verarbeitet sind die Taktzeiten für die Herstellung eines Produktes ein wichtiges Kriterium und daher kommen Thermoformmaschinen mit Karusselltischen oder mit Schwenktischen zum Einsatz.

Als weitere wichtige Größe für den Einsatz der Maschinen ist die Zeit von Bedeutung, die man braucht, um ein Werkzeug zu wechseln. Die eingesetzten Werkzeuge müssen sehr genau positioniert werden, um Ausschuss oder gar Beschädigung des Werkzeuges und/oder der Presse zu vermeiden. Die Zeit für Werkzeugwechsel ist unproduktive Standzeit, daher ist es von hoher wirtschaftlicher Bedeutung diesen Arbeitsvorgang schnellstmöglich und doch präzise durchführen zu können.

Es ist Aufgabe der Erfindung ein Verfahren zur Verfügung zu stellen, dass auf einfache Art und Weise und mit hoher Präzision einen Werkzeugwechsel in einer Thermoformmaschine ermöglicht.

Die Aufgabe wird gelöst mit einem Verfahren nach Anspruch 1. Vorteilhafterweise wird durch das erfindungsgemäße Verfahren das Werkzeug schnell und präzise in die Maschine eingebracht. Das Oberwerkzeug bildet dabei der Bezugspunkt, an dem das Unterwerkzeug ausgerichtet wird. Dadurch vermeidet man einen Versatz zwischen den Werkzeugen und das Auftreten von Spannungen zwischen den beiden Werkzeugteilen. Vorteilhafterweise werden die beiden Werkzeugteile außerhalb der Maschine auf Betriebstemperatur vorgewärmter. Auf diese Art und Weise ist ein schnellerer Werkzeugwechsel bzw. die schnellere Wiederaufnahme der Produktion möglich.
Vorteilhafterweise wird das Verfahren für eine Karusselltischpresse eingesetzt.
Vorzugsweise wird das Verfahren für eine Schwenktischpresse verwendet, wobei das Oberwerkzeug am Schwenktisch verspannt ist.

### Beschreibung der Erfindung

Die Erfindung wird nachfolgend beispielhaft unter Bezugnahme auf die beigefügte Zeichnung beschrieben.
- Fig. 1: zeigt eine schematische Darstellung einer Schwenktischpresse teilweise unbestückt
- Fig. 2: zeigt die Presse mit Werkzeug bestückt
- Fig. 3: bis Fig 5 zeigen die Rüstungsschritte für das Werkzeug

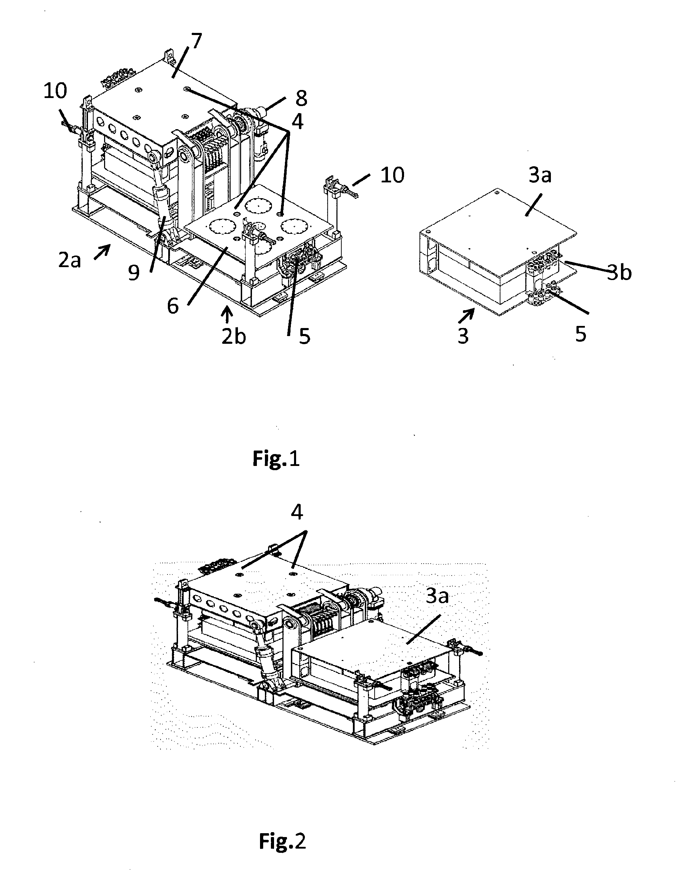

Fig.1 zeigt eine Thermoformpresse 1, in diesem Fall eine Schwenktischpresse, mit einer ersten Arbeitsstationen 2a und einer zweiten Arbeitsstation 2 b. Die zweite Arbeitsstation 2b ist nicht mit einem Werkzeug bestückt. Das zweite Werkzeug 3 ist in der rechten Hälfte der Zeichnung getrennt dargestellt. Es besteht aus einem Oberwerkzeug 3a und einem Unterwerkzeug 3b, wobei die beiden Teile über Kupplungen 5 verfügen. Auf dem Tisch sind Mittel zur Zentrierung 4 angebracht, welche zur Zentrierung des Werkzeuges 3 dienen. Solche Mittel zur Zentrierung 4 können in einfachstem Fall kegelige Bohrungen oder Stifte sein, aber auch Spannzangen oder andere Spannelemente, welche dem Fachmann bekannt sind, sein. Falls die ebene Tischplatte für das Einbringen des Werkzeugs notwendig ist, können diese Zentrierelemente versenkt ausgeführt sein und bei dem Aufsetzen des Werkzeuges mechanisch, elektrisch, pneumatisch oder hydraulisch oder die Kombination dieser, ausgefahren und später, wenn erwünscht ist, wieder versenkt werden.
Die die erste Arbeitsstation 2a ist bereits mit einem ersten Werkzeug 3' bestückt. Die Schwenktischpresse selbst besteht aus zwei Presstischen 6 und einem Schwenktisch 7, der über eine Hydraulik 9 zwischen den beiden Arbeitsstationen um eine Achse 8 verschwenkbar angeordnet ist. Der Schwenktisch 7 trägt in der dargestellten Situation ein Oberwerkzeug 3a' der ersten Arbeitsstationen 2a. Die sichtbare Seite des Schwenktisches 7 zeigt weitere Mittel zur Zentrierung 4, die zur Aufnahme des weiteren Oberwerkzeugs 3a dienen. Der Schwenktisch 7 ist mit Verriegelung 10 an der Arbeitsstationen 2a verriegelt. Die Verriegelungen 10 der Arbeitsstation 2b sind offen, da das Gegenstück in Form des Schwenktisches 7 fehlt.

Die nachfolgende Beschreibung zeigt das Verfahren, um die zweite Arbeitsstationen 2b mit dem zweiten Werkzeug 3 zu bestücken.

Der erste Schritt ist die Werkzeugvorbereitung. Der Werkzeugsatz 3 bestehend aus zwei Werkzeughälften, dem Unterwerkzeug 3b und dem Oberwerkzeug 3a kann noch weitere Werkzeugelemente, wie Schieber, Lanzen usw. aufweisen, wobei diese zusätzlichen Teile als Bestandteile des Werkzeugsatzes betrachtet werden und für die Erfindung nicht relevant sind.

Das vorgewärmte Oberwerkzeug 3a wird auf das ebenso vorgewärmte Unterwerkzeug 3b gehoben und die beiden Werkzeugteile miteinander verriegelt. Die Zentrierung der beiden Werkzeughälften erfolgt dabei im Werkzeug selbst und die Verriegelung kann mit integrierten oder mit temporär angebrachten externen Spannelementen erfolgen. Durch die Vorwärmung des Werkzeugsatzes treten keine schädlichen Verspannungen auf und die Maschine ist ohne Aufwärmzeit einsatzbereit.

Dann wird der Werkzeugsatz 3 mit geeignetem Hebemittel wie einem Kran oder Manipulator über den Presstisch 7 der Arbeitsstation 2b gebracht und annähernd ausgerichtet. Die Ausrichtung erfolgt dabei mittels einer an der Arbeitsstation angebrachten Vorrichtung oder durch elektronische und/oder optische Kontrollpunkte.

Anschließend wird der Werkzeugsatz 3 auf dem Presstisch 7 abgesetzt. Etwaige Hilfsvorrichtungen und externe Verriegelungen am Werkzeugsatz werden entfernt, interne Arretierungen gelockert, bzw. ebenfalls entfernt. Die Zentrierung der Werkzeughälften zueinander bleibt aber intakt, da die Werkzeughälften einfach plan übereinanderliegen. Diese Situation beim Rüsten des Werkzeugs ist in Figur 2 dargestellt. Der Schwenktisch 7 liegt noch auf der ersten Arbeitsstation 2a, auf der zweiten Arbeitsstation 2b ist das Werkzeug 3 grob vorjustiert abgelegt.

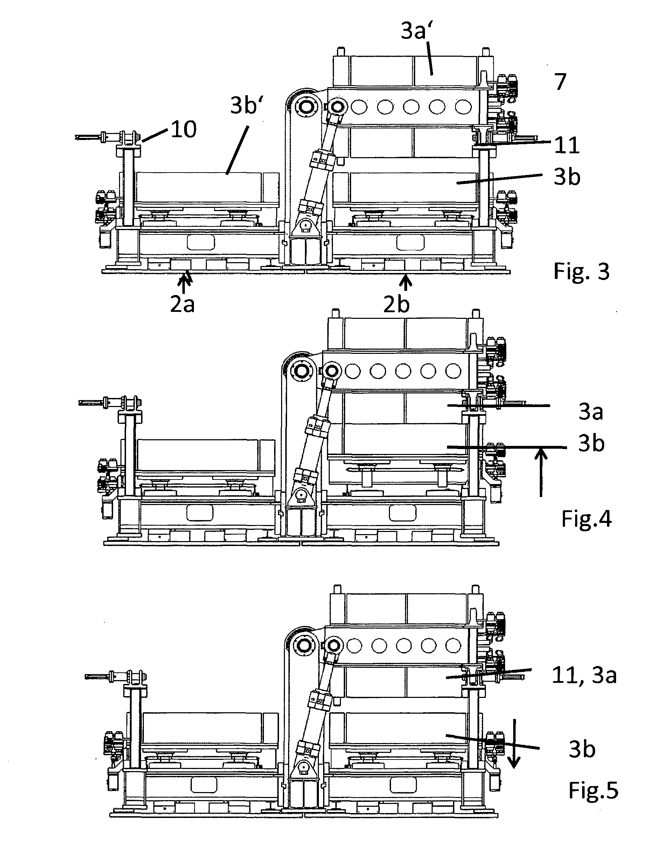

Im nächsten Verfahrensschritt wird die Presse an der Arbeitsstation 2b geschlossen und mit der Verriegelung 10 verriegelt. Dabei wird der Schwenktisch 7 über den Werkzeugsatz 3 geklappt und die Sperrvorrichtung für den Schwenktisch wird betätigt. Man erkennt in Figur 3 die Stellung der Bauteile zueinander. Der Schwenktisch weist eine Aufnahme 11 auf, in der das Oberwerkzeug 3a aufgenommen wird. Der RG1 Schwenktisch ist durch die Verriegelung 10 in seiner vertikalen Lage fixiert.

In Schritt der Figur 4 wird der Presstisch 6 mit der Hilfe der unter dem Presstisch angeordneten Presse gegen den verriegelten Schwenktisch hochgefahren. Dadurch werden auch beide Werkzeugteile das Ober- und das Unterwerkzeug vertikal nach oben verschoben, wobei das Oberwerkzeug in die Aufnahme 11 des Schwenktisches geschoben wird.

Durch dieses Hochfahren siehe Figur 4 kommen die Kupplungen 5 des Oberwerkzeugs mit den Kupplungen am Schwenktisch in Kopplung und dadurch wird die Energieversorgung des Oberwerkzeuges angeschlossen und die Verbindung zu Luft, Vakuum, Temperierung, Elektrik hergestellt.

Im nächsten Schritt wird das fertig positionierte Werkzeug 3 gespannt. Das Oberwerkzeug wird am Schwenktisch z.B. mit mindestens einem Spannelement, welches große Kräfte übertragen kann und als Zentrierung wirkt, als erste der beiden Werkzeughälften fixiert. Die Zentrier- und Spannelemente im Oberwerkzeug legen für das gesamte Werkzeug 3 die Fixpunkte fest. Das Unterwerkzeug 3b ist zu diesem Zeitpunkt nicht am Presstisch befestigt und folgt durch die interne Zentrierung den Vorgaben durch das Oberwerkzeug 3a. Anschließend wird das Unterwerkzeug 3b in seiner finalen Position nur gegen Verschiebung gesichert.

Nach dem Spannvorgang kann das Unterwerkzeug 3b mit dem Presstisch nach unten in Arbeitsposition gefahren werden, das Oberwerkzeug 3a bliebt über dem geöffneten Werkzeug am Schwenktisch hängen.

Im Falle dass die Arbeitsstation 2 a nicht mit einem Werkzeugsatz bestückt wäre, würde das Verfahren für die andere Seite der Schwenktischpresse analog ablaufen.

### Bezugszeichenliste

- 1: Schwenktischpresse
- 2: 2a und 2b erste und zweite Arbeitsstation
- 3: zweiter Werkzeugsatz, 3a Oberwerkzeug, 3b Unterwerkzeug
- 4: Mittel zur Zentrierung
- 5: Kupplung
- 6: Presstisch
- 7: Schwenktisch
- 8: Achse
- 9: Hydraulik
- 10: Verriegelung
- 11: Aufnahme

- 3': erster Werkzeugsatz

## Patentansprüche

1. Verfahren zum Einbringen von Werkzeugsätzen in eine thermoformende Maschine wobei die thermoformende Maschine mindestens eine Arbeitsstation für einen Werkzeugsatz aufweist und der Werkzeugsatz bestehend aus einem Ober- und einem Unterwerkzeug (3a, 3b) außerhalb der Arbeitsstation miteinander verbunden wird, wobei der Werkzeugsatz (3a, 3b) auf die Arbeitsstation gesetzt wird, **dadurch gekennzeichnet, dass**
- eine bewegliche Platte der Maschine in Arbeitsstellung versperrt wird,
- das Unterwerkzeug (3b) mit dem Oberwerkzeug (3a) gegen die versperrte Platte verfahren wird,
- das Oberwerkzeug (3a) an der versperrten Platte der Maschine zentriert und verspannt wird und
- das Unterwerkzeug (3b) in der Position, die vom Oberwerkzeug (3a) vorgegeben ist, anschließend gesichert wird.

2. Verfahren nach Anspruch 1, **dadurch gekennzeichnet, dass** das Oberwerkzeug über Kupplungen mit der Maschine verbunden wird.

3. Verfahren nach Anspruch 1, **dadurch gekennzeichnet, dass** der Werkzeugsatz (3a, 3b) vor der Montage vorgewärmt wird.

4. Verfahren nach Anspruch 1, **dadurch gekennzeichnet, dass** die thermoformende Maschine von einer Karusselltischpresse dargestellt wird.

5. Verfahren nach Anspruch 1, **dadurch gekennzeichnet, dass** die thermoformende Maschine von einer Schwenktischpresse dargestellt wird.

6. Verfahren nach Anspruch 5, **dadurch gekennzeichnet, dass** der Schwenktisch (7) die jeweiligen Oberwerkzeuge aufnimmt.

7. Verfahren nach Anspruch 5, **dadurch gekennzeichnet, dass** das Oberwerkzeug (3a) mit mindestens einem Spann- und Zentriermittel befestigt wird.

8. Verfahren nach Anspruch 4, **dadurch gekennzeichnet, dass** das Unterwerkzeug (3b) auf einem Presstisch (6) aufliegt, der sich gegen das Oberwerkzeug (3a) vertikal verfahren lässt.

## Claims

1. Method for introducing tool sets into a thermoforming machine, wherein the thermoforming machine has at least one work station for a tool set and the tool set, composed of an upper tool and a lower tool (3a, 3b), is interconnected outside of the work station, wherein
the tool set (3a, 3b) is placed onto the work station, **characterized in that**
- a movable plate of the machine is locked in the operating position,
- the lower tool (3b), together with the upper tool (3a), is displaced against the locked plate,
- the upper tool (3a) is centred and braced on the locked plate of the machine, and
- the lower tool (3b) is subsequently secured in the position that is predetermined by the upper tool (3a).

2. Method according to Claim 1, **characterized in that** the upper tool is connected to the machine via couplers.

3. Method according to Claim 1, **characterized in that** the tool set (3a, 3b) is preheated prior to mounting.

4. Method according to Claim 1, **characterized in that** the thermoforming machine is represented by a carousel-table press.

5. Method according to Claim 1, **characterized in that** the thermoforming machine is represented by a pivot-table press.

6. Method according to Claim 5, **characterized in that** the pivot table (7) receives the respective upper tools.

7. Method according to Claim 5, **characterized in that** the upper tool (3a) is fastened by way of at least one bracing-and-centring means.

8. Method according to Claim 4, **characterized in that** the lower tool (3b) bears on a press table (6) which is vertically displaceable against the upper tool (3a).

## Revendications

1. Procédé pour introduire des jeux d'outils dans une machine de thermoformage, la machine de thermoformage présentant au moins un poste de travail pour un jeu d'outils et le jeu d'outils étant constitué d'un outil supérieur et d'un outil inférieur (3a, 3b), qui sont connectés à l'extérieur du poste de travail, le jeu d'outils (3a, 3b) étant placé sur le poste de travail, **caractérisé en ce que**
- une plaque mobile de la machine est bloquée dans une position de travail,
- l'outil inférieur (3b) est déplacé avec l'outil supérieur (3a) contre la plaque bloquée,
- l'outil supérieur (3a) est centré sur la plaque bloquée de la machine et est serré et
- l'outil inférieur (3b) est ensuite fixé dans la position prédéfinie par l'outil supérieur (3a).

2. Procédé selon la revendication 1, **caractérisé en ce que** l'outil supérieur est connecté à la machine par le biais d'accouplements.

3. Procédé selon la revendication 1, **caractérisé en ce que** le jeu d'outils (3a, 3b) est préchauffé avant le montage.

4. Procédé selon la revendication 1, **caractérisé en ce que** la machine de thermoformage est réalisée par une presse à table tournante.

5. Procédé selon la revendication 1, **caractérisé en ce que** la machine de thermoformage est réalisée par une presse à table pivotante.

6. Procédé selon la revendication 5, **caractérisé en ce que** la table pivotante (7) reçoit les outils supérieurs respectifs.

7. Procédé selon la revendication 5, **caractérisé en ce que** l'outil supérieur (3a) est fixé avec au moins un moyen de serrage et de centrage.

8. Procédé selon la revendication 4, **caractérisé en ce que** l'outil inférieur (3b) repose sur une table de presse (6) qui peut être déplacée verticalement vers l'outil supérieur (3a).
